(19) Europäisches Patentamt
European Patent Office
Office européen des brevets

(11) EP 4 628 403 A1

(12) EUROPEAN PATENT APPLICATION

(43) Date of publication:
08.10.2025 Bulletin 2025/41

(21) Application number: 24305524.1

(22) Date of filing: 04.04.2024

(51) International Patent Classification (IPC):
$B64C\ 11/30^{(2006.01)}$    $G01B\ 7/02^{(2006.01)}$
$G01B\ 11/02^{(2006.01)}$    $G01B\ 21/16^{(2006.01)}$
$G01B\ 17/06^{(2006.01)}$    $B64C\ 11/38^{(2006.01)}$

(52) Cooperative Patent Classification (CPC):
B64C 11/301; B64C 11/38

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: Ratier-Figeac SAS
46101 Figeac Cedex (FR)

(72) Inventors:
• AUBARET, Yohann
Capdenac (FR)
• MARGER, Thibault
Beduer (FR)

(74) Representative: Dehns
10 Old Bailey
London EC4M 7NG (GB)

(54) **SENSING SYSTEM**

(57) A sensing system and a method of sensing are disclosed. The sensing system has a sensor apparatus (140) and a target portion (124) for sensing by the sensor apparatus (140). The target portion (124) is integral with, or configured for coupling to, a component of an assembly so as to translate along an axis, and the target portion (124) has an outer surface which has a profile that changes with distance along the axis. The sensor apparatus (140) is configured for non-translating mounting adjacent the target portion (124), and has at least one distance sensor (142, 144). The method comprises sensing a distance between the distance sensor (142, 144) and the outer surface of the target portion (124), wherein the sensed distance varies as the target portion (124) translates axially, and outputting a signal in dependence on the sensed distance.

FIG. 2

EP 4 628 403 A1

## Description

TECHNICAL FIELD

This disclosure relates to a sensing system, e.g. for sensing propeller blade angle.

BACKGROUND

Aircraft propellers comprise a plurality of blades fixed to a rotating propeller hub. Blade pitch refers to the angle between the propeller blade chord line and the plane of rotation of the propeller. Variable pitch propellers are provided with a pitch change system that enables the blade pitch of each blade to be collectively controlled. Variable pitch propeller blades allow the angle of attack of the blade relative to the oncoming airflow to be varied. For example, the blade pitch can be adjusted from feather position (minimum thrust/ drag) to a reverse position that may provide reverse thrust. A propeller blade that is at a high pitch angle produces more thrust at a given RPM (revolutions per minute) than at low pitch.

Propeller pitch change systems commonly use hydraulic actuation systems to control the pitch of the propeller blade. A typical hydraulic actuator comprises a hydraulic piston housed within a piston sleeve. A cover is usually provided at a forward-most end such that a first chamber is formed between the cover sleeve and piston and a second chamber is formed between the sleeve and the piston, the piston separating the chambers.

A transfer tube usually extends from the piston chambers axially aftward to a hydromechanical control unit which meters hydraulic flow and pressure to the two sides of the pitch change actuator piston in response to an electrical signal provided from an electronic unit (a propeller dedicated electronic unit, a FADEC or Aircraft electronic unit). Supply pressure is provided at the hydromechanical control unit inlet by a hydraulic fluid source (hydraulic pumps).

A position sensor is typically positioned at the end of the transfer tube inside the hydromechanical control unit to provide electrical signals to the electronic control unit that are indicative of sensed actuator linear position (being the mirror of the sensed blade angle position). Typically, the position sensor is a duplex rotary variable differential transformer (RVDT) or linear variable differential transformer (LVDT) in order to comply with aircraft safety and dispatchability requirements. RVDT or LVDT feedback are calibrated at aircraft level upon pilot demand. However, such an approach results in a heavy and mechanically complex system.

There is a desire for an improved sensing system.

SUMMARY OF THE DISCLOSURE

From a first aspect, the disclosure provides a sensing system comprising:

a sensor apparatus; and
a target portion for sensing by the sensor apparatus,

wherein:

the target portion is integral with, or configured for coupling to, a component of an assembly so as to translate along an axis;
the target portion comprises an outer surface having a profile that changes with distance along the axis;
the sensor apparatus is configured for non-translating mounting adjacent the target portion, and comprises at least one distance sensor for sensing a distance between the distance sensor and the outer surface of the target portion, wherein the sensed distance varies as the target portion translates axially; and
the sensor apparatus is configured to output a signal in dependence on the sensed distance.

From a further aspect the disclosure provides a method of sensing comprising:

sensing a distance between a distance sensor of a sensor apparatus and an outer surface of a target portion, wherein the target portion is integral with, or configured for coupling to, a component of an assembly so as to translate along an axis, wherein the target portion comprises an outer surface having a profile that changes with distance along the axis, and wherein the sensor apparatus is configured for non-translating mounting adjacent the target portion, wherein the sensed distance varies as the target portion translates axially; and
outputting a signal from the sensor apparatus in dependence on the sensed distance.

In some examples, the target portion is integral with, or configured for coupling to, a component of a variable pitch propeller assembly so as to translate along the axis in a predetermined relationship to a pitch angle of one or more blades of a propeller of the variable pitch propeller assembly, and the signal is indicative of the pitch angle of the one or more blades of the propeller.

From a further aspect the disclosure provides a propeller system for an aircraft, the propeller system comprising:

a variable pitch propeller assembly comprising a propeller and configured for controlling a pitch angle of one or more blades of the propeller; and
a propeller blade angle sensing system as disclosed herein, wherein the target portion is integral with, or coupled to, a component of the variable pitch propeller assembly.

From a further aspect the disclosure provides an aircraft comprising one or more propeller systems as disclosed herein.

By providing the target portion with an outer profile that changes with distance along the axis of translation of the target portion, the variation of the sensed distance to the target portion at any point along its length may be used to determine information about a state of the assembly. In examples where the assembly is a variable pitch propeller assembly, it may be used to determine a pitch angle of the one or more blades of the propeller. This may provide a lightweight blade angle sensing system with low complexity. In some examples, the profile of the outer surface of the target portion is such that the sensed distance varies monotonically with distance along the axis. Thus, in some examples, for a given axial displacement of the target portion relative to the sensor apparatus, the distance between the sensor apparatus and the outer surface of the target portion represents a unique pitch angle of the one or more blades of a propeller. A monotonically changing profile of the outer surface may simplify subsequent processing steps which may be performed, e.g. to determine the pitch angle of the one or more blades of a propeller (e.g. as a quantified and/or calibrated value) from the output signal of the sensor apparatus.

In some examples, the target portion is integral with, or configured for coupling to, a component of the variable pitch propeller assembly so as to rotate about the axis when the propeller rotates. The outer surface of the target portion may be a surface of revolution, about the axis, having a diameter that changes with distance along the axis. The diameter may change monotonically with distance along the axis. By designing the outer surface of the target portion such that is a surface of revolution about the axis of rotation, the distance from the outer surface of the target portion to the sensor apparatus at a given axial position along the target portion may be the same regardless of whether the target portion is rotating or not. The blade angle sensing system may thus be operated in a way that is agnostic of the rotational speed of the target portion. In particular, it may be used to determine the pitch angle when the propeller is not rotating.

At least in some examples, the sensor apparatus does not contact the target portion. The sensor apparatus thus need not require any physical interface with the target portion when the target portion is rotating and/or translating in order to determine the blade angle. It may thereby have low mechanical wear and high reliability.

In examples where the outer surface of the target portion changes monotonically with distance along the axis, the outer surface of the target portion may have any profile which changes monotonically with distance along the axis. It may be smooth (i.e. continuous) or stepped. However, in some examples, the profile of the outer surface changes linearly with distance along the axis for the extent of the surface - e.g. the target portion may be frustoconical in shape. A linear profile of the outer surface of the target portion may advantageously simplify subsequent processing steps which may be performed, e.g. to determine the pitch angle of the one or more blades of the propeller (e.g. as a quantified and/or calibrated value) from the output signal of the sensor apparatus.

The signal output by the sensor apparatus may be an analogue (e.g. voltage) signal or a digital signal. In some examples, the signal may be output to a processing system. The processing system may form part of the blade angle sensing system or may be distinct therefrom. It may comprise an analogue to digital converter. It may be arranged to receive the output signal from the sensor apparatus, and use a predetermined relationship between the output of the sensor apparatus and the pitch angle of the one or more propeller blades to determine (e.g. a value of) the pitch angle of the one or more propeller blades. It may determine the pitch angle as a digital and/or calibrated value. The predetermined relationship may be stored in a memory of the processing system-e.g. as a lookup table or as parameters for an algorithm. The processing system may be implemented in hardware (e.g. using application-specific digital logic and/or an FPGA) or in software (e.g. comprising a processor and a memory storing software for performing one or more of the processing operations disclosed herein), or using a combination of both.

The distance sensor may comprise any suitable system for sensing (i.e. measuring qualitatively or quantitively) the distance between the distance sensor and the outer surface of the target portion. For example, the distance sensor may comprise an inductive sensor element, or a capacitive sensor element, or a Hall-effect sensor element, or an optical sensor element, or an ultrasound sensor element. It may comprise one or a plurality of such sensor elements. In some examples, the distance sensor comprises one or more inductive sensor elements, which may be respective eddy-current sensor elements. In such examples, at least the outer surface of the target portion may be conductive. An inductive sensor element may comprise an electromagnetic sensor coil and drive circuitry for driving the electromagnetic coil with an alternating current. The impedance of the electromagnetic sensor coil may vary depending on a distance (e.g. air gap) between the target portion and the electromagnetic sensor coil. In particular, the impedance of the electromagnetic sensor coil may increase as the distance decreases. An inductive distance sensor may therefore sense one or more distances between the distance sensor and the outer surface of the target portion by sensing a level of, or change in, impedance of a respective electromagnetic sensor coil of the distance sensor.

In some examples, the sensor apparatus comprises:

a first inductive sensor element comprising:

a first electromagnetic sensor coil;

first drive circuitry for driving the first electromagnetic sensor coil with a first alternating current at a first predetermined frequency; and
first sensing circuitry, electrically coupled to the first electromagnetic sensor coil, and configured to output a first signal having a component that is indicative of a distance from the first electromagnetic sensor coil to the outer surface of the target portion;

a second inductive sensor element comprising:

a second electromagnetic sensor coil;
second drive circuitry for driving the second electromagnetic sensor coil with a second alternating current at a second predetermined frequency, wherein the second predetermined frequency is offset from the first predetermined frequency by an offset amount;
second sensing circuitry, electrically coupled to the second electromagnetic sensor coil, and configured to output a second signal having a component that is indicative of a distance from the second electromagnetic sensor coil to the outer surface of the target portion; and

filtering circuitry configured to apply low-pass filtering to the first and/or second signals, wherein the low-pass filtering has a cut-off frequency that is below the offset amount such that a component of the first and/or second signal caused by mutual inductance between the first and second electromagnetic sensor coils is attenuated, and to output a first and/or second filtered signal indicative of the distance from the first and/or second electromagnetic sensor coil to the outer surface of the target portion.

Such an arrangement may help to reduce or avoid interference resulting from mutual inductance between the two electromagnetic coils. The first and second sensor elements may be elements of a same distance sensor, or of two distance sensors, respectively.

In examples where the distance sensor comprises an inductive sensor element, an electromagnetic sensor coil of the inductive sensor element may comprise one or more turns of conductive wire. Increasing the number of turns of conductive wire may increase the strength of the magnetic field produced by the electromagnetic sensor coil. A stronger magnetic field may increase the sensing range of the inductive sensor element. On the other hand, decreasing the number of turns of conductive wire may increase the weight of the sensor apparatus. When implementing the propeller blade-angle sensing system in an aircraft, the total weight of the sensor apparatus may be a relevant consideration. In some examples, the coil may have only a single turn.

The distance sensor may be arranged such that it extends circumferentially around the target portion. It may be ring-shaped. It may be mounted coaxially with the axis of the target portion, with the target portion passing through an opening in the distance sensor. In examples where the distance sensor comprises an electromagnetic sensor coil, the coil may comprise one or more turns of conductive wire extending circumferentially around the target portion. In other examples, the distance sensor may comprise one or more sensor elements (e.g. respective electromagnetic sensor coils) positioned at a common axial position along the axis and positioned at different respective radial positions around the axis of the target portion. The sensor elements may be uniformly spaced around the target portion. In some examples, the distance sensor may comprise exactly two sensor elements, wherein the sensor elements are arranged diametrically opposite each other. Each sensor element (e.g. coil) may be oriented to measure a radial distance to the target portion (e.g. with its coil axis radial to the axis).

In some examples, the sensor apparatus may comprise a plurality of distance sensors, each of which may have any of the features disclosed herein. Each of the plurality of distance sensors may be positioned at a different respective axial position along the axis of the target portion. Using a plurality of distance sensors to each sense a respective distance between the respective sensor and the outer surface of the target portion may allow a plurality of independent signals indicative of the pitch angle of the one or more blades of the propeller to be generated. In some examples, each of the plurality of distance sensors may be driven by a different respective driving circuit and/or power supply. The propeller blade angle sensing system may be configured to output a blade pitch angle signal even when one or more of the distance sensors is not operational (e.g. has failed). This may be important for safety regulations or system dispatchability, especially in examples where the propeller blade angle sensing system is implemented in an aircraft.

In examples where a plurality of sensor elements (e.g. electromagnetic sensor coils) are positioned at the same axial position along the axis of the target portion as one another, an average value, e.g. a mean value, of distance between the sensor elements and the outer surface of the target portion for the given axial position may be calculated. This average value may be calculated by the sensor apparatus, or by a processing system in examples where the sensor apparatus is configured to output the signal in dependent on the sensed distance to a processing system. This average value may be used to determine a value of the pitch angle of the one or more blades of the propeller.

In examples where a plurality of distance sensors are positioned at different axial positions along the axis of the target portion, the sensor apparatus may output a respective plurality of signals in dependence on a respective sensed distance. Each output signal from the sensor apparatus may be processed to calculate a respective value of the pitch angle of the one or more blades of the propeller. An average value, e.g. a mean value, for the pitch angle of the one or more blades of the propeller may then be calculated (e.g. by a processing system) from the plurality of pitch angle values. Calculating a pitch angle value from a plurality of output signals from the sensor apparatus according to either method outlined above may improve the accuracy of the determined pitch angle.

In some examples where the sensor apparatus comprises a plurality of distance sensors or sensor elements, a processing system may be configured such that, if one or more of the plurality of distance sensors or elements is in a non-working condition, the pitch angle of the one or more blades of propeller is determined from an output of one or more distance sensors or elements that is in a working condition. Such a non-working condition may occur in the scenario where one or more of the plurality of distance sensors or sensor elements fails. This may improve the resilience of the propeller blade angle sensing system to component failure, thus effectively adding redundancy and/or independence to the propeller blade angle sensing system.

In some examples the propeller blade angle sensing system may be implemented in an aircraft. In such examples the propeller blade angle sensing system may be communicatively coupled to an aircraft control system for controlling the pitch angle of the one or more propeller blades.

Features of any aspect or example described herein may, wherever appropriate, be applied to any other aspect or example described herein. Where reference is made to different examples or sets of examples, it should be understood that these are not necessarily distinct but may overlap.

BRIEF DESCRIPTION OF THE DRAWINGS

Certain preferred examples of the disclosure will now be described, by way of example only, with reference to the accompanying drawings, in which:

Figure 1 is a schematic diagram of a propeller assembly with a blade pitch angle sensing system;
Figure 2 is a schematic diagram showing a cross-sectional view of the arrangement of the sensor apparatus relative to a portion of the transfer tube, when the transfer tube is in a first displacement position along the rotational axis A;
Figure 3 is a schematic diagram showing a cross-sectional view of the arrangement of the sensor apparatus relative to a portion of the transfer tube, when the transfer tube is in a second displacement position along the rotational axis A;
Figure 4 is a schematic diagram showing a first exemplary ring-shaped sensor;
Figure 5 is a schematic diagram showing a second exemplary ring-shaped sensor;

Figure 6 is a schematic diagram showing a sensor array comprising two electromagnetic sensors which could be used for the sensor apparatus;
Figure 7 is a schematic diagram showing exemplary circuitry for implementing an eddy-current distance sensor;
Figure 8 is a schematic diagram showing an exemplary implementation of the conditioning circuitry of the eddy-current distance sensor;
Figure 9 is a plot showing the exemplary form of an output signal from the eddy-current distance sensor;
Figure 10 is a plot showing an example of a low-pass filter used to attenuate the sinusoidal variation in the output signal of the eddy-current sensor 1120 in accordance with examples of the disclosure; and
Figure 11 is a plot showing an output signal from the low-pass filter when it is applied to the output signal of the eddy-current sensor 1120.

DETAILED DESCRIPTION

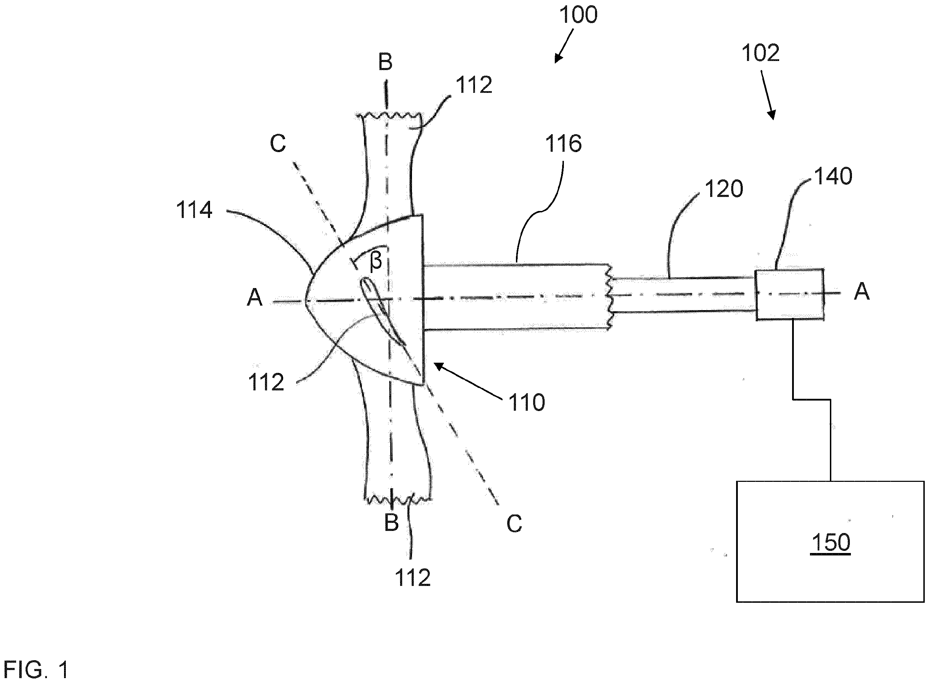

Figure 1 is a schematic diagram of a variable-pitch propeller assembly 100 and a blade angle sensing system 102. Shown in Figure 1 is a variable-pitch propeller 110 of the assembly 100, comprising a plurality of propeller blades 112 mounted to a propeller hub 114. A torque transmitted by the propeller shaft 116 is configured to rotate the propeller 110 about the axis labelled A, the propeller shaft 116 being coupled to an engine (not shown). The engine could be a thermal engine or an electric motor. An elongate fluid transfer tube 120 is mechanically coupled to the propeller 110 for altering the pitch (beta) angle of the blades 112.

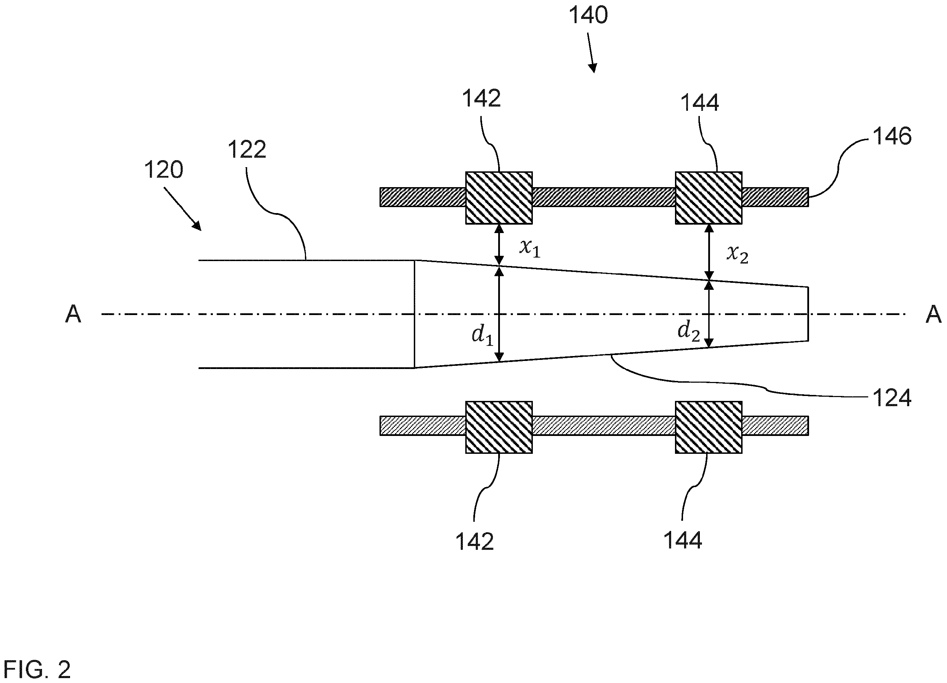

The blade angle sensing system 102 comprises a sensor apparatus 140 that is rigidly mounted in proximity to a moveable target portion 124 (as visible in Figure 2) of the transfer tube 120. The sensor apparatus 140 is communicatively coupled to a processing unit 150, which may be part of the sensing system 102, or which may be distinct from the sensing system 102 (e.g. being part of a more complex vehicle control system).

Each of the propeller blades 112 is rotatable through a range of adjustable blade pitch (beta) angles (marked β in Figure 1) being the angle between the chord line (see label C in Figure 1) of the propeller blade section, and a plane perpendicular to the axis of propeller (see label B in Figure 1). The fluid transfer tube 120, which is filled with a hydraulic fluid such as oil, is coupled to an actuator within the rotating hub 114 of the propeller 110 in such a way that the transfer tube 120 rotates coaxially with the propeller 110, and translates axially with varying pitch angle of the blades 112 of the propeller 110. Thus, the axial translation of the transfer tube 120 may be used to determine the blade pitch angle. The sensor apparatus 140 is configured to sense (i.e. measure qualitatively or quantitively) this axial displacement, and the processing unit 150 receives and uses the information from the sensor apparatus 140 to provide feedback to an operator and/or to control the engine or propeller. The processing unit 150 may, in some examples, determine the blade pitch angle of the plurality of propeller blades 112 as a quantifiable value (e.g. in degrees). Whilst in Figure 1, the transfer tube 120 is located coaxially within the hollow propeller shaft 116, this need not be the case in all examples.

The arrangement of the sensor apparatus 140 relative to the transfer tube 120 is shown in more detail in Figure 2. Other components of a conventional propeller and propulsion system are considered to be well-known to a person skilled in the art and not pertinent to the disclosure herein. They are thus are emitted from Figure 1 for simplicity.

Figure 2 is a schematic diagram showing a cross-sectional view of the arrangement of the sensor apparatus 140 relative to a portion 124 of the transfer tube 120, when the transfer tube is in a first displacement position along the rotational axis A.

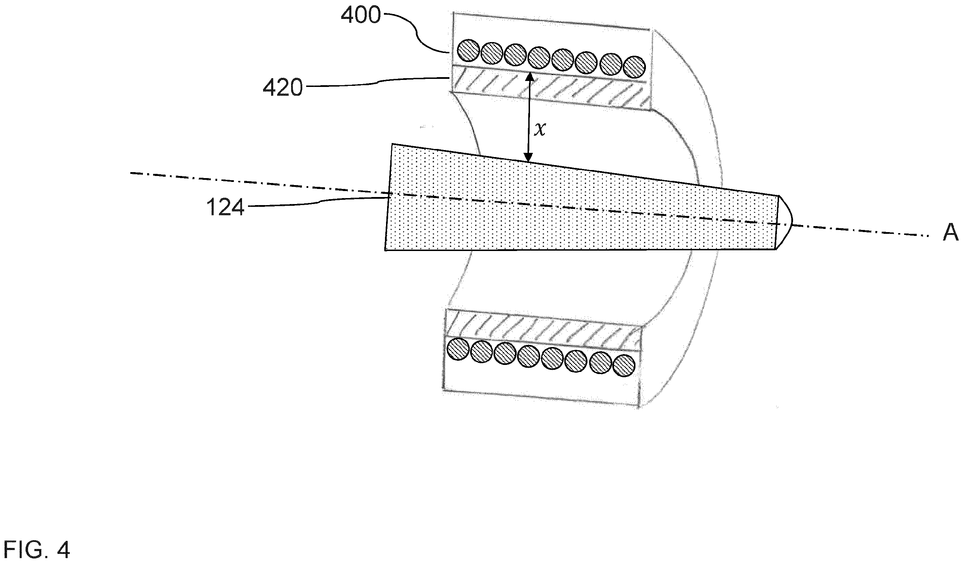

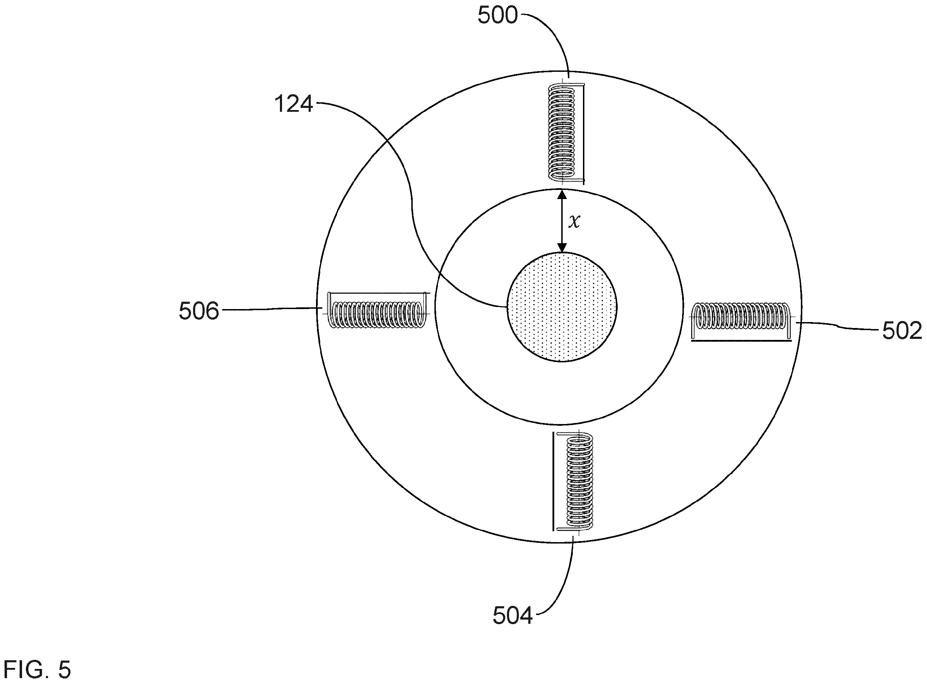

The transfer tube 120 comprises a main tubular portion 122, supported by a bearing (out of view beyond the left edge of Figure 2), and a target portion 124 mounted to, or integral with, an end of the transfer tube 120. The sensor apparatus 140 comprises a support member (e.g. a frame or housing) 146, a first distance sensor 142 and a second distance sensor 144. Each distance sensor 142, 144 is rigidly held by the support member 146, which is statically mounted to a housing of the propeller assembly 100 or engine, such that the target portion 124 can rotate and move axially relative to the sensor apparatus 140. In the arrangement shown in Figure 2 each distance sensor 142, 144 is cylindrical ring-shaped and mounted coaxially around the target portion 124 of the transfer tube 120. In some examples, each distance sensor 142, 144 comprise one or more coils of wire, each having one or more turns. These may be spaced around the circumference of the ring-shaped sensor, facing towards the target portion 124 (e.g. as described with reference to Figure 5 below), or may wrap around the target portion 124 (e.g. as described with reference to Figure 4 below). The coils are electrically coupled to driving and sensing circuitry within the sensor apparatus 140, which outputs analogue or digital signals to the processing system 150. Each distance sensor may have its own drive circuitry (e.g. an oscillator) and sensing circuitry. This may provide robustness in case part of the sensing system 102 fails.

The target portion 124 not only rotates with the propeller 110, but is configured to translate axially with varying pitch angle of the blades 112 of the propeller blades 112. Due to the static mounting of the sensor apparatus 140, this causes the target portion 124 to move relative to the sensors 142, 144, . As can be seen in Figure 2, the target portion 124 comprises an outer surface that is a surface of revolution about the axis of rotation labelled A, and that has a diameter d which decreases monotonically with increasing distance along the axis of rotation A away from the propeller hub 114.

At a first exemplary position along the axis of rotation A the target portion 124 has a diameter $d_1$, and at a second exemplary position along the axis of rotation A the target 124 has a diameter $d_2$ which is smaller than $d_1$. Whilst the slope of the surface of the target portion 124 shown in Figure 2 is linear (i.e. frustoconical in shape), other examples may use other profiles where the diameter still changes monotonically with distance along the axis of rotation A (e.g. shaped like a trumpet bell) . Each distance sensor 142, 144 can be used to sense a respective distance between the distance sensor 142, 144 and the outer surface of the target portion 124 adjacent the sensor 142, 144. Due to the shape of the target portion 124, for each of the distance sensors 142, 144, the distance between the distance sensor and the outer surface of the target portion 124 will also vary monotonically with axial displacement of the target portion 124 along the axis of rotation A. As can be seen in Figure 2, at the first position along the axis of rotation A the distance $x_1$ between the target portion 124 and the first distance sensor 142 varies inversely with diameter $d_1$, and the distance $x_2$ between the target portion 124 and the second distance sensor 144 varies inversely with the diameter $d_2$. This will be the case regardless of whether the target portion 124 is rotating or not. This allow the sensing system 102 to advantageously sense the blade angle even when the propeller is not turning.

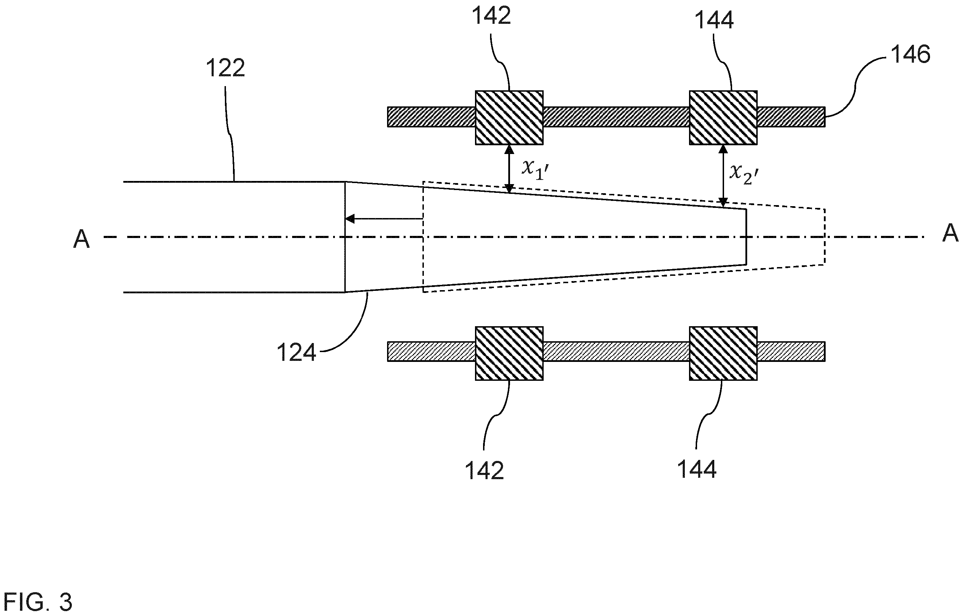

Figure 3 is a schematic diagram showing the transfer tube 120 in a second displacement position along the rotational axis A. The dashed outline shown in Figure 3 corresponds to the first displacement position of the target portion 124 as depicted in Figure 2. As can be seen in Figure 3, in the second displacement position of the transfer tube 120, the distance $x_{1'}$ from the first distance sensor 142 to the outer surface of the target portion 124 is greater than the distance $x_1$ from the first distance sensor 142 to the outer surface of the target portion 124, which was measured in the first displacement position of the transfer tube 120. The same applies for the second distance sensor 144 - i.e. the distance $x_{2'}$ from the second distance sensor 144 to the outer surface of the target portion 124 in the second displacement position of the transfer tube 120 is greater than the distance $x_2$ from the first distance sensor 142 to the outer surface of the target portion 124 which was measured in the first displacement position of the transfer tube 120.

Thus it can be seen that, as the transfer tube 120 moves along the rotational axis A, the first distance sensor 142 will measure a varying distance x to the outer surface of the target portion 124, and, due to the monotonicity of this relationship, for a given axial displacement of the transfer tube 120, the distance between the first distance sensor 142 and the outer surface of the target portion 124 represents a unique pitch angle of the blades 112 of the propeller 110. The same applies to the measurements made by the second distance sensor 144.

In the example shown in Figures 2 and 3, the sensor apparatus 140 has two similar distance sensors 142, 144, arranged side by side. However, in some examples the blade angle feedback system 102 has only a single ring-shaped distance sensor - e.g. corresponding to the first sensor 142 only - and the pitch angle of the propeller blades 112 can be determined from the measurements output by this one distance sensor only. Other examples may have three or more sensors. Using two or more distance sensors to measure the distance to the surface of the target portion 124 allows two or more independent signals indicative of the distance to the target portion to be generated for improved accuracy and/or reliability (e.g. in case one sensor fails).

The sensor apparatus 140 outputs one or more signals in dependence on the sensed distances $x_1$, $x_2$ to the processing system 150 shown in Figure 1, and the processing system 150 may determine a calibrated pitch angle of the propeller blades 112 by processing the received signals. The processing system 150 may be configured to use a predetermined mathematical relationship between the output of the sensor apparatus 140 and the pitch angle of the propeller blades 112 to determine the pitch angle of the propeller blades 112. For example, each measured distance may be converted to a pitch angle using a look-up table stored in memory, or may be used to evaluate a mathematical equation. In order to improve the accuracy of the sensor system, a calibration may be performed in some examples for calibrating the end points of the range of axial displacement over which the transfer tube can move - i.e. the propeller pitch angle may be determined at each limit position of the transfer tube, fore and aft along the axis of rotation. These calibration points may be used to adjust values in the look-up table, or may be used when evaluating an equation.

Each signal indicative of the distance to the target portion from each sensor 142, 144 may be independent of the other, and may be used individually to determine a respective value for the pitch angle of the propeller blades 112. However, when both sensors 142, 144 are working, the propeller blade angle sensing system 102 may average the signals from each (e.g. a mean). Calculating an average value may improve the accuracy and stability of the propeller blade angle sensing system (e.g. in the presence of noise affecting one of the sensors). Furthermore, having at least two different sensors in the propeller blade angle sensing system can add redundancy to the system, and thus improve its safety and reliability.

Whilst in some examples the output signals from each of the distance sensors 142, 144 may be combined together by the processing system 150 in order to determine the pitch angle of the propeller blades 112, it should be appreciated that, due to redundancy afforded by the system, the sensor apparatus 140 and the processing system 150 may be configured such that if one of the distance sensors 142, 144 were to fail, a pitch angle of the propeller blades can still be determined in dependence on the output signal from whichever distance sensor is still operational.

In this or other examples, each distance sensor may be constructed in any suitable way for qualitatively or quantitively sensing a distance from the distance sensor to the outer surface of the target portion proximate the sensor. Each sensor may comprise a single sensor element, or a plurality of sensor elements, e.g. uniformly spaced in a ring. The elements in some examples described herein are coils, but other example systems may use one or more sensor elements that are inductive sensor elements, or capacitive sensor elements, or Hall effect sensor elements, or optical sensor elements, or ultrasonic sensor elements, or any combination of such elements.

In examples where the distance sensor comprises an inductive sensor element, at least the outer surface of the target portion may be required to be conductive. In examples using a Hall-effect sensor element, at least part of the outer surface of the target portion may be magnetic. In examples using an optical sensor, the outer surface of the target portion may be reflective. Similar design considerations for the target portion may be taken with regard to the use of other types of distance sensors.

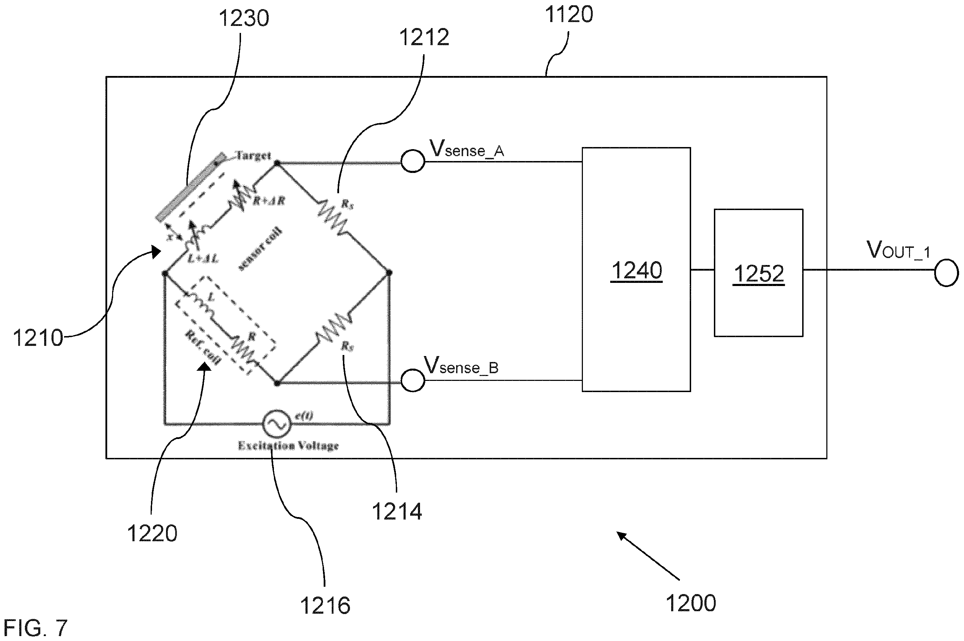

Figure 4 shows an exemplary construction of a ring-shaped inductive distance sensor that could be used as one or each of the sensors 142, 144 shown in Figure 7. In this example, the distance sensor comprises a coil of wire 400 which is wrapped around the circumference of a ring-shaped support structure 420. The support structure is manufactured from a non-magnetic material such as a plastic, e.g. polyvinyl chloride (PVC). The coil 400 may have a single turn of wire around the circumference of the ring, but in some examples, e.g. as shown in Figure 4, the coil 400 comprises a plurality of turns of wire. The strength of the magnetic field created by the coil when driven by an alternating supply may be increased by increasing the number of turns. This may allow the coil 400 of the distance sensor 142, 144 to be more sensitive to changes in distance to the surface of the target portion 124.

As an alternative to the sensor shown in Figure 4, the schematic diagram of Figure 5 shows an example of an alternative ring-shaped inductive distance sensor. This alternative arrangement could also be used as one or both of the sensors 142, 144 shown in Figure 7. The ring-shaped sensor shown in Figure 5 comprises four coils of wire 500, 502, 504 and 506 spaced uniformly around the circumference of the ring-shaped sensor, with each coil axis arranged radially to the rotational axis of the target portion 124. Although four coils are shown in Figure 5, more or less than four coils may be used in other examples. In some examples, each coil may have a ferromagnetic core. The ferromagnetic core doesn't increase the strength of the magnetic field produced by the coil but permits to focus it on the target and act as shield to reduce magnetic pollution caused by the sensor. Using a ferromagnetic core may improve the focus of its sensing capability. Having a plurality of coils 500, 502, 504 and 506 spaced around the circumference of the distance sensors 142, 144 can provide a plurality of measurements of the distance to the surface of the target portion 124-one from each sensor element-for a given axial position of the sensor. In such a system, an average value - e.g. the mean value - of the measured distances from each coil in the distance sensor may be calculated, and the pitch angle of the propeller may be determined using an average measured distance. This may improve the accuracy of the distance sensing.

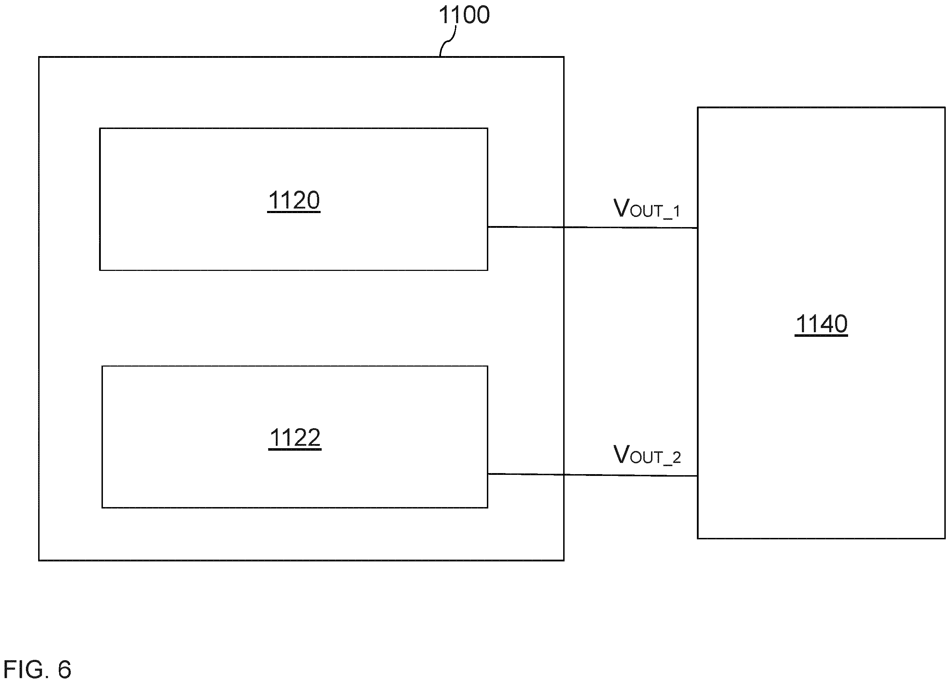

An inductive sensor as described above may be used as a standalone sensor. However, in examples described above where two or more inductive sensor elements are used (e.g. in two different distance sensors, or within the same ring-shaped distance sensor), these may be mounted close to one another. Where multiple electromagnetic sensor elements are mounted in close proximity to one another, mutual inductance between the respective sensor elements (e.g. their respective coils) can cause interference, especially where the two sensor elements do not share the same excitation signal. Where the electromagnetic sensors are driven using alternating supplies with different frequencies to one another, the interference from mutual induction varies with time in the output signals of the sensors, meaning the output of the sensors is difficult to calibrate to account for the interference. The interference in the output signals from each of the distance sensors can be mitigated as described in more detail below with reference to Figures 6 to 11.

Figure 6 is a schematic diagram showing a sensor array 1100 comprising two electromagnetic sensors 1120, 1122. In the example described herein each of the sensors 1120, 1122 is an eddy-current proximity sensor, although in other examples the electromagnetic sensors 1120, 1122 could be two different types of inductive (i.e. coil-based) sensor. Whilst there are two electromagnetic sensors shown in Figure 6, the present disclosure may be applicable to arrays comprising more than two electromagnetic proximity sensors-e.g. arranged in a line or as a rectangular array. The coils of the sensors 1120, 11122 may have parallel axes and may lie in a common plane, although this is not essential.

As shown in Figure 6, the first sensor 1120 is arranged to output a first analogue output signal $V_{OUT\_1}$ to a processing system 1140 (e.g. comprising a microcontroller with a memory storing software for performing operations as described herein). The second sensor 1122 is arranged to output a second analogue output voltage $V_{OUT\_2}$ to the processing system 1140. The processing system 1140 may be configured to process the output signals from the first sensor 1120 and second sensor 1122 and output information regarding the distance between a conductive target and the sensor array 1100. Whilst the processing system 1140 in Figure 6 is schematically shown as one block, receiving both output signals $V_{OUT\_1}$ and $V_{OUT\_2}$, it should be understood that processing system 11140 may encompass multiple analogue and/or digital circuit components which may be electrically and/or physically separate to one another. Each of the sensors 1120, 1122 may contain or be coupled to a different respective oscillator. Driving each sensor using a separate alternating supply, rather than a single common supply, can add redundancy to the system and allow the system 1100 still to sense distance even if one of the oscillators fails. This may be important in safety-critical systems, where the failure of one component should not result in the failure of the whole system. This may apply to aircraft systems, for example.

Figure 7 is a schematic diagram showing exemplary circuitry 1200 for implementing an eddy-current proximity sensor as implemented in each of the first sensor 1120 and the second sensor 1122 shown in Figure 6. The circuitry 1200 comprises a Wheatstone bridge having a sensor coil 1210 on a first branch, a reference coil 1220 on a second branch, a first balancing resistors Rs 1212 on a third branch, and a second balancing resistor Rs 1214 on a fourth branch. An oscillator 1216 provides an excitation voltage across the Wheatstone bridge to energise the sensor coil 1210. A conductive target 1230 is shown in close proximity to the sensor coil 1210. As explained above, the impedance of the sensor coil 1210 will change depending on the proximity of a conductive target 1230 to the sensor coil 1210. The sensor coil 1210 is therefore modelled as a variable inductor and variable resistor. The reference coil 1220 is modelled as an inductor with fixed inductance and a resistor with fixed resistance. A first sensing voltage $V_{sense\_A}$, and a second sensing voltage $V_{sense\_B}$ are output from the Wheatstone bridge to conditioning circuitry 1240. The analogue conditioning circuitry 1240 is followed by filtering circuitry 1252 which together use the change in the sensing voltages to determine a sensor output signal $V_{OUT\_1}$ having a steady voltage level that is indicative of a distance from the respective sensor coil to the conductive target 1230.

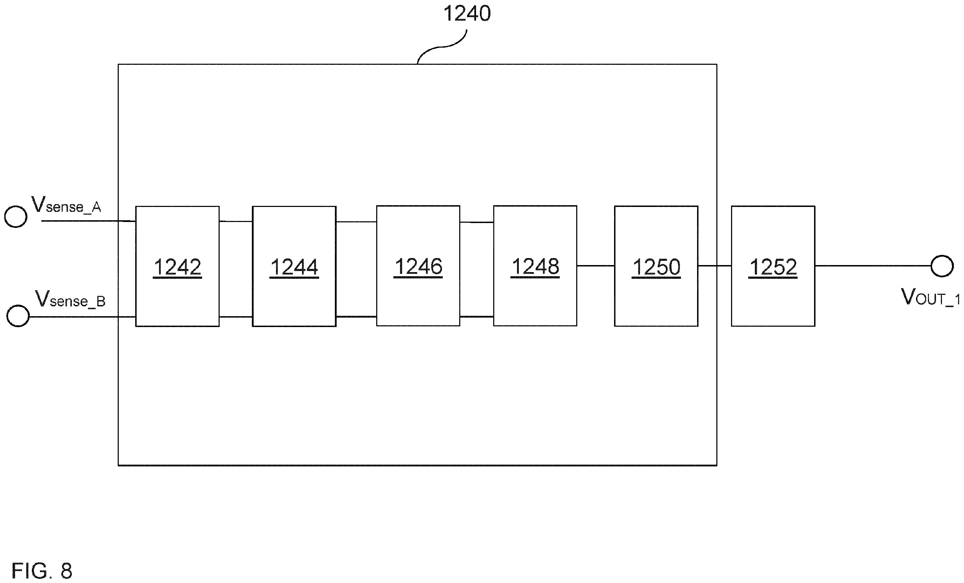

Figure 8 is a schematic diagram showing an exemplary implementation of the conditioning circuitry 1240 shown in Figure 7. The conditioning circuitry 1240 receives the first sensing voltage $V_{sense\_A}$ and a second sensing voltage $V_{sense\_B}$ from the Wheatstone bridge shown in Figure 7. This differential signal is passed through, in order: a first impedance adaptation and gain stage 1242; a full wave rectifier 1244; a second impedance adaptation and gain stage 1246; and a differential-to-single-ended conversion stage 1248, which is configured to output a single-ended voltage signal representative of the proximity of the conductive target 1230 to the sensor coil 1210. This single-ended signal is input to a mean value extraction stage 1250. Extracting a mean value 1250 may improve the stability of the signal which is output from the conditioning circuitry 1240. The output of the mean value extraction stage 1250 is then passed to filtering circuitry 1252, which is arranged to apply a low-pass filter as described herein. Each of these different stages of circuitry could be implemented in a number of different ways, and some examples may omit one or more of them, or include additional stages, or perform these operations in a different order. For example, the low-pass filter 1252 here receives a single-ended input but could, in some examples, receive and filter a differential signal.

For each sensor 1120, 1122, any of all of the components and connections that form the Wheatstone bridge, apart from the sensor coil 1210 itself, as well as any or all of the components of the conditioning circuitry 1240, may collectively implement the "sensing circuitry" as disclosed herein.

The outputs $V_{OUT\_1}$, $V_{OUT\_2}$ from the two sensors 1120, 1122 may be further processed by the processing system 1140 shown in Figure 6. This system 1140 may comprise components for performing analogue signal processing and/or digital signal processing. It may include one or more analogue or digital displays for displaying information to a user. The processing system 1140 may include one or more analogue to digital converters (ADCs) for sampling the voltages $V_{OUT}$. e.g. comprising each being compared against a voltage threshold by an analogue or digital comparator, or comprising each being converted into a digital value representative of a respective distance to the conductive target 1230 for further digital processing and/or display to a user.

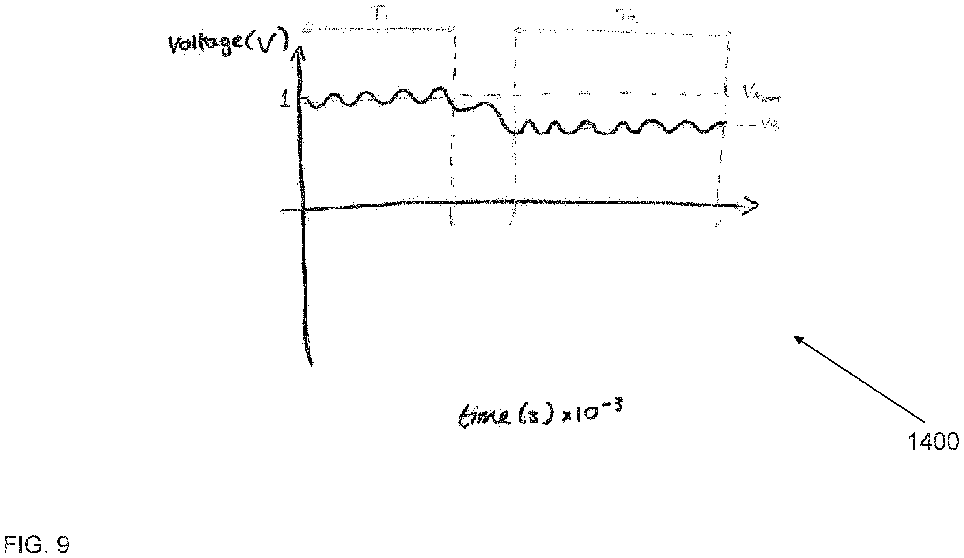

Figure 9 is a plot 1400 showing the form of an exemplary output signal $V_{OUT\_1}$ from the conditioning circuitry 1240 of the eddy-current proximity sensor 1120 shown in Figures 1 and 2 in one example use case, before the output signal is input to the filtering circuitry 1252. The plot 1400 shows the output signal $V_{OUT\_1}$ from the conditioning circuitry 1240 over a first period of time T1 in which the conductive target 1230 is located at a first distance from the sensor coil 1210, and a later, second period of time T2, in which the conductive target 1230 is located at a second distance from the sensor coil 1210.

During the first period of time T1 the output signal $V_{OUT\_1}$ takes the approximate form of:

$$V_{OUT\_1} \approx V_A + B \sin \theta t$$

During the second period of time T2 the output signal $V_{OUT\_1}$ takes the approximate form of:

$$V_{OUT\_1} \approx V_B + B \sin \theta t$$

The sinusoidal component in the output signal $V_{OUT\_1}$ is caused by cross-talk interference from the second sensor 1122. The frequency of this sinusoidal variation $\theta$ can be calculated as being equal to the difference between the driving frequency $\omega_1$ of the first coil 1120, and the driving frequency $\omega_2$ of the second coil 1122 - i.e. $\theta = |\omega_1 - \omega_2|$, where the first sensor input signal is modelled as $V_{IN\_1} = A \sin \omega_1 t$, and the second sensor input signal is modelled as $V_{IN\_2} = B \sin \omega_2 t$.

A constant or slowly-changing DC (i.e. low-frequency) component in the output signal $V_{OUT\_1}$ varies with the separation distance between the first sensor coil 1210 and the conductive target 1230. Thus, the signal component $V_A$ is representative of the separation distance during the first time period T1, and the signal component $V_B$ is representative of the separation distance during the second time period T2. The relationship between the output signal $V_{OUT\_1}$ and the separation distance may vary in dependence on the shape of the conductive target 1230.

In the example shown in the plot 1400, there is a significant difference between the driving frequency of the first sensor 1120 and the second sensor 1122. The absolute value of $\omega_1 - \omega_2$ - i.e. the offset amount referred to above, can be chosen for a given application based on a required sensitivity in the measurement of distance to the target 1230 over time. The frequency of the sinusoidal variation ($\theta = |\omega_1 - \omega_2|$) may be chosen to be high compared to the maximum expected variation in the output signal due to a change in separation between the sensor coil and the conductive target.

Purposefully selecting the driving frequency of the first coil and the driving frequency of the second coil so that they are substantially different to one another enables the relatively low-frequency component of the sensing signal which is of interest to be isolated using a low-pass filter. The relatively high frequency of the sinusoidal variation in the output signal is filtered out by a low-pass filter, where the low-pass filter is designed to attenuate the frequency of the sinusoidal variation caused by the expected interference effect. The greater the difference between the driving frequency of the first coil and the driving frequency of the second coil, the more bandwidth is available for the remaining sensing signal produced by the sensor system after the output signal of the conditioning circuitry 1240 is passed through the low-pass filter in the filtering circuitry 1252. A greater bandwidth remaining in the output signal may allow the system to be more responsive to changes in the proximity of the conductive target 1230 to the sensor coil 1210.

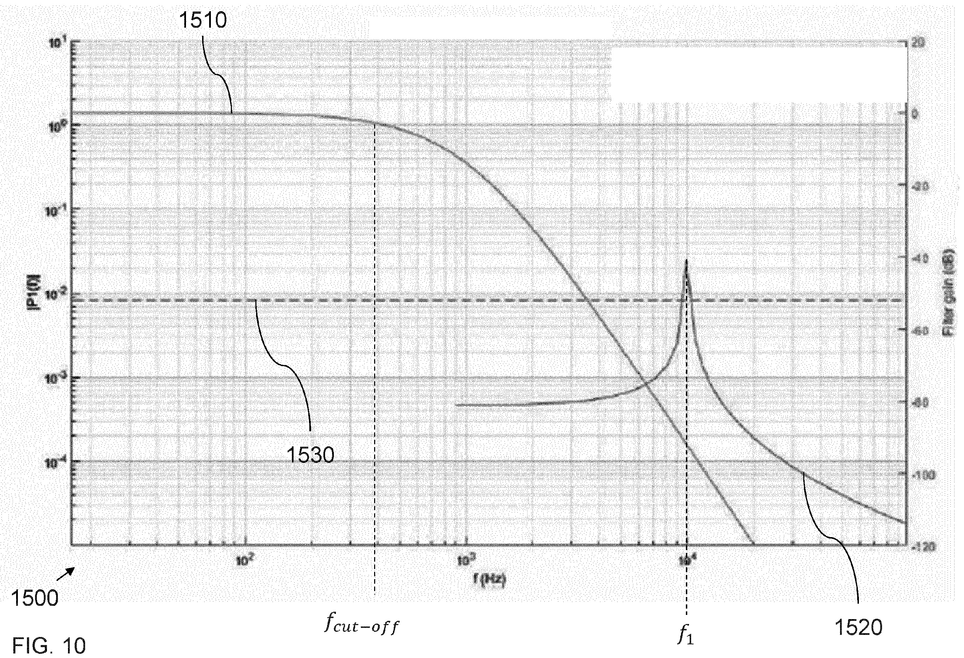

Figure 10 is a plot showing an example action of a low-pass filter that may be used to attenuate the sinusoidal variation in the output signal $V_{OUT\_1}$ of the first sensor 1120 in some examples. A second similar or identical low-pass filter may be used to filter the output signal $V_{OUT\_2}$ of the second sensor.

The plot shown in Figure 10 shows, on the right side vertical axis, the gain 1510 of the low-pass filter in decibels (dB) as it varies with frequency. It also shows, on the left side vertical axis, the output frequency spectrum 1520 of the first sensor output signal $V_{OUT\_1}$. The output frequency spectrum 1520 peaks at frequency $f_1$ (1100 kHz in this example), where $f_1 = \dfrac{\theta}{2\pi}$. As can be seen in Figure 10, the attenuation of the low-pass filer 1510 is around -92 dB at this peak, $f_1$, in the output frequency spectrum 1520. The low-pass filter 1510 may be designed such that the -cut-off frequency $f_{cut-off}$ (1 kHz in this example) is approximately a factor of ten less than the peak frequency of the output frequency spectrum 1520. The horizontal line 1530 represents an attenuation objective with a crosstalk error of less than 0.1% full scale.

In examples where eddy-current proximity sensors are used in control systems which need to be highly responsive, a corresponding minimum bandwidth may be required to remain in the sensing system. For example, a minimum of 1100Hz of bandwidth may be required to remain in the output signal from the conditioning circuitry 1240. The difference between the driving frequency of the first sensor and the second sensor may therefore be set to be approximately 1kHz or greater, such that the low-pass filtering circuitry 1252 does not substantially attenuate frequencies at 1100Hz or less.

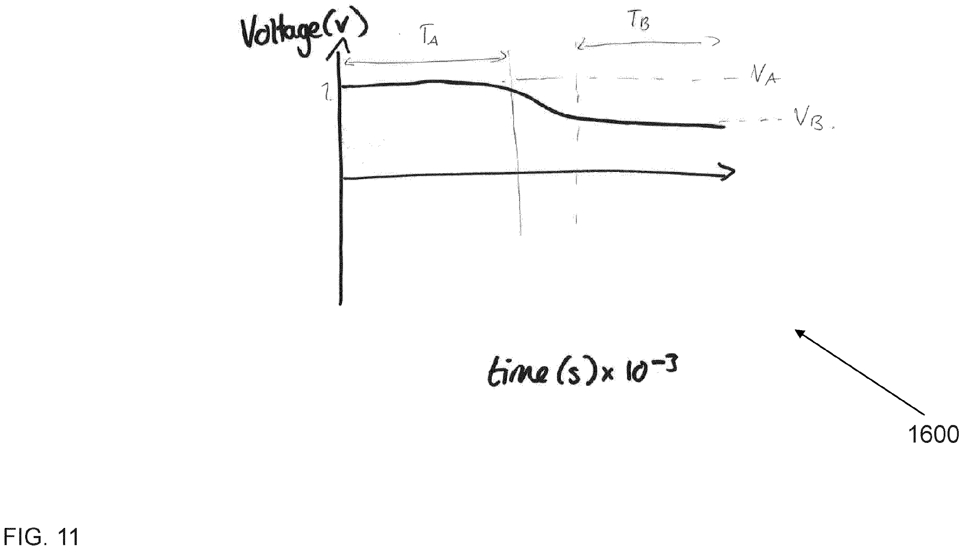

Figure 11 is a plot 1600 showing an exemplary output signal from the low-pass filter 1510 shown in Figure 10 when it is applied to the output signal $V_{OUT\_1}$ of the eddy-current sensor 1120 shown in Figures 1 and 2. As can be seen, the variation in the low-frequency (i.e. slowly varying DC) component of the output signal $V_{OUT\_1}$ (e.g. $V_A$ and $V_B$), which could be seen in Figure 10, remains, but the high-frequency sinusoidal variation due to cross-talk from mutual inductance, which could previously be seen in Figure 10, has been filtered out.

Whilst the example is described above with reference to mitigating cross-talk interference between only two sensors, the principles of the present disclosure can equally apply to arrays of more than two sensors located in close proximity with one another. Where there are more than two sensors, the cut-off frequency of the low-pass filter 1510 may be designed such that it attenuates frequencies which are greater than or equal to the smallest difference in frequency between the frequencies of any two driving supplies - e.g. the filter may be designed such that

$$f_{cut-off} \leq \frac{1}{10} min \left( \frac{|\omega_m - \omega_n|}{2\pi} \right)$$

where $\omega_m$ and $\omega_n$ are driving frequencies used in the sensor array for different respective sensors $m$ and $n$, and the cut-off frequency $f_{cut-off}$ is chosen to be a factor of ten lower than the expected minimum cross-talk frequency. By cutting-off from the smallest expected difference in frequency, all larger differences in frequencies will also be filtered out.

Although examples have been described in the context of a variable pitch propeller assembly, the sensing system is not limited to this application and may be used in different types of assembly in other examples.

It will be appreciated by those skilled in the art that the disclosure has been illustrated by describing one or more specific examples thereof, but is not limited to these examples; many variations and modifications are possible, within the scope of the accompanying claims.

## Claims

1. A sensing system comprising:

   a sensor apparatus; and
   a target portion for sensing by the sensor apparatus,

   wherein:

   the target portion is integral with, or configured for coupling to, a component of an assembly so as to translate along an axis;
   the target portion comprises an outer surface having a profile that changes with distance along the axis;
   the sensor apparatus is configured for non-translating mounting adjacent the target portion, and comprises at least one distance sensor for sensing a distance between the distance sensor and the outer surface of the target portion, wherein the sensed distance varies as the target portion translates axially; and
   the sensor apparatus is configured to output a signal in dependence on the sensed distance.

2. The sensing system of claim 1, wherein the profile of the outer surface of the target portion is such that the sensed distance varies monotonically with distance along the axis.

3. The sensing system of any preceding claim, wherein the sensor apparatus does not contact the target portion.

4. The sensing system of any preceding claim, wherein the target portion is frustoconical in shape.

5. The sensing system of any preceding claim, wherein the distance sensor comprises an inductive sensor element, or a capacitive sensor element, or a Hall-effect sensor element, or an optical sensor element, or an ultrasound sensor element.

6. The sensing system of any preceding claim, wherein the distance sensor comprises one or more eddy-current sensor elements.

7. The sensing system of any preceding claim, wherein the distance sensor is ring-shaped and is arranged to extend around the target portion, coaxially with the axis of the target portion.

8. The sensing system of any preceding claim, wherein the sensor apparatus comprises a plurality of distance sensors, each positioned at a different respective axial position along the axis of the target portion.

9. The sensing system of any preceding claim, wherein the sensor apparatus comprises:

   a first inductive sensor element comprising:

   a first electromagnetic sensor coil;
   first drive circuitry for driving the first electromagnetic sensor coil with a first alternating current at a first predetermined frequency; and
   first sensing circuitry, electrically coupled to the first electromagnetic sensor coil, and configured to output a first signal having a component that is indicative of a distance from the first electromagnetic sensor coil to the outer surface of the target portion;

   a second inductive sensor element comprising:

   a second electromagnetic sensor coil;
   second drive circuitry for driving the second electromagnetic sensor coil with a second alternating current at a second predetermined frequency, wherein the second predetermined frequency is offset from the first predetermined frequency by an offset amount;
   second sensing circuitry, electrically coupled to the second electromagnetic sensor coil, and configured to output a second signal having a component that is indicative of a distance from the second electromagnetic sensor coil to the outer surface of the target portion; and

   filtering circuitry configured to apply low-pass filtering to the first and/or second signals, wherein the low-pass filtering has a cut-off frequency that is below the offset amount such that a component of the first and/or second signal caused by mutual inductance between the first and second electromagnetic sensor coils is attenuated, and to output a first and/or second filtered signal indicative of the distance from the first and/or second electromagnetic sensor coil to the outer surface of the target portion.

10. The sensing system of any preceding claim, wherein:

    the target portion is integral with, or configured for coupling to, a component of a variable pitch propeller assembly so as to translate along the axis in a predetermined relationship to a pitch angle of one or more blades of a propeller of the variable pitch propeller assembly; and
    the signal is indicative of the pitch angle of the one or more blades of the propeller.

11. The sensing system of claim 10, wherein the target portion is integral with, or configured for coupling to, the component of the variable pitch propeller assembly so as to rotate about the axis when the propeller rotates, and the outer surface of the target portion is a surface of revolution, about the axis, having a diameter that changes with distance along the axis.

12. The sensing system of claim 10 or 11, further comprising a processing system arranged to receive the signal from the sensor apparatus, and to use a predetermined relationship between an output of the sensor apparatus and the pitch angle of the one or more propeller blades to determine a value of the pitch angle of the one or more propeller blades.

13. The sensing system of any of claims 10 to 12, wherein the sensor apparatus comprises a plurality of distance sensors, each positioned at a different respective axial position along the axis of the target portion, and wherein the sensor apparatus is configured to output a signal indicative of the pitch angle of the one or more blades of the propeller even when one or more of the plurality of distance sensors is not operational.

14. A propeller system for an aircraft, the propeller system comprising:

    a variable pitch propeller assembly comprising a propeller and configured for controlling a pitch angle of one or more blades of the propeller; and
    a propeller blade angle sensing system as claimed in any of claims 10 to 13, wherein the target portion is integral with, or coupled to, a component of the variable pitch propeller assembly.

15. A method of sensing, comprising:

    sensing a distance between a distance sensor of a sensor apparatus and an outer surface of a target portion, wherein the target portion is integral with, or configured for coupling to, a component of an assembly so as to translate along an axis, wherein the target portion comprises an outer surface having a profile that changes with distance along the axis of rotation, and wherein the sensor apparatus is configured for non-translating mounting adjacent the target portion, wherein the sensed distance varies as the target portion translates axially; and
    outputting a signal from the sensor apparatus in dependence on the sensed distance.

FIG. 1

FIG. 2

EP 4 628 403 A1

FIG. 3

EP 4 628 403 A1

FIG. 4

EP 4 628 403 A1

FIG. 5

EP 4 628 403 A1

FIG. 6

FIG. 7

EP 4 628 403 A1

FIG. 8

EP 4 628 403 A1

1400

FIG. 9

FIG. 10

FIG. 11

## EUROPEAN SEARCH REPORT

**Application Number**

EP 24 30 5524

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/248085 A1 (CARRINGTON CHRISTOPHER ROY [GB]) 31 August 2017 (2017-08-31)<br><br>* paragraph [0012] - paragraph [0014]; figure 2 *<br>* paragraph [0018] * | 1,3-7, 10-12, 14,15 | INV.<br>B64C11/30<br>G01B7/02<br>G01B11/02<br>G01B21/16<br>G01B17/06 |
| X | GB 2 260 821 A (UNITED TECHNOLOGIES CORP [US]) 28 April 1993 (1993-04-28)<br><br>* page 13, line 16 - page 14, line 7; figure 1 * | 1-3,5,6, 10-12, 14,15 | ADD.<br>B64C11/38 |
| X | US 2018/106320 A1 (LIN XING PING [US] ET AL) 19 April 2018 (2018-04-19)<br><br>* paragraph [0045] - paragraph [0046]; figures 5A, B *<br>* paragraph [0066] - paragraph [0069]; figures 8A, B * | 1,3,5,6, 8-10,13, 15 | |
| X | US 2021/285758 A1 (UEKITA MASAHIRO [JP]) 16 September 2021 (2021-09-16)<br>* paragraph [0053] - paragraph [0055]; figures 18, 19 * | 1,3,5, 10,15 | TECHNICAL FIELDS SEARCHED (IPC)<br><br>B64C |
| A | US 2007/001109 A1 (HEYWORTH HAROLD [GB]) 4 January 2007 (2007-01-04)<br>* the whole document * | 1-15 | |

The present search report has been drawn up for all claims

| Place of search | Date of completion of the search | Examiner |
|---|---|---|
| Munich | 9 September 2024 | Talvitie, Risto |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 30 5524

This annex lists the patent family members relating to the patent documents cited in the above-mentioned European search report.
The members are as contained in the European Patent Office EDP file on
The European Patent Office is in no way liable for these particulars which are merely given for the purpose of information.

09-09-2024

| Patent document cited in search report | Publication date | Patent family member(s) | | Publication date |
|---|---|---|---|---|
| US 2017248085 A1 | 31-08-2017 | CA | 2958045 A1 | 29-08-2017 |
| | | CN | 107131056 A | 05-09-2017 |
| | | FR | 3048232 A1 | 01-09-2017 |
| | | GB | 2548085 A | 13-09-2017 |
| | | JP | 2017154727 A | 07-09-2017 |
| | | US | 2017248085 A1 | 31-08-2017 |
| GB 2260821 A | 28-04-1993 | FR | 2689853 A1 | 15-10-1993 |
| | | GB | 2260821 A | 28-04-1993 |
| US 2018106320 A1 | 19-04-2018 | CN | 109906322 A | 18-06-2019 |
| | | EP | 3526484 A1 | 21-08-2019 |
| | | JP | 2019536951 A | 19-12-2019 |
| | | KR | 20190075966 A | 01-07-2019 |
| | | US | 2018106320 A1 | 19-04-2018 |
| | | WO | 2018075349 A1 | 26-04-2018 |
| US 2021285758 A1 | 16-09-2021 | DE | 102020215570 A1 | 16-09-2021 |
| | | JP | 2021148458 A | 27-09-2021 |
| | | NL | 2027087 A | 20-10-2021 |
| | | US | 2021285758 A1 | 16-09-2021 |
| US 2007001109 A1 | 04-01-2007 | EP | 1736738 A2 | 27-12-2006 |
| | | US | 2007001109 A1 | 04-01-2007 |

EPO FORM P0459

For more details about this annex : see Official Journal of the European Patent Office, No. 12/82